# EUROPEAN PATENT SPECIFICATION

(11) **EP 1 197 958 B1**
(45) Date of publication and mention of the grant of the patent: **05.11.2008**
(21) Application number: 01304434.2
(22) Date of filing: 18.05.2001
(51) Int. Cl.: G11B 7/09, G11B 7/085

(54) **Apparatus and method for detecting defocus error signal for optical pickup and seek direction detecting apparatus and method adopting the same**
Vorrichtung und Verfahren zur Detektion eines Defokussierungsfehlersignals für einen optischen Abtastkopf, und Vorrichtung zur Detektion einer Suchrichtung und Verfahren dazu
Dispositif et procédé de détection de signal d'erreur de défocalisation pour une tête de lecture optique, et dispositif de détection de la direction de recherche et procédé associé

(30) Priority: 12.10.2000 KR 2000060030
(43) Date of publication of application: 17.04.2002
(73) Proprietor: SAMSUNG ELECTRONICS CO., LTD., Suwon-City, Kyungki-do (KR)
(72) Inventor: Ma, Byung-in, Suwon-si, Gyeonggi-do (KR); Park, In-sik, 615-801 Shinnamushil Kukdong Apt., Suwon-si, Gyeonggi-do (KR); Chung, Chong-sam, 718-1904 Salgugol Donga Apt., Suwon-si, Gyeonggi-do (KR); Jeon, Jin-hoon, Suwon-si, Gyeonggi-do (KR); Doh, Tae-yong, 144-1204 Hwanggol Jugong Apt., Suwon-si, Gyeonggi-do (KR); Choi, Byoung-ho, 43-502 Jugong 1-danji Apt., Suwon-si, Gyeonggi-do (KR)
(74) Representative: Robinson, Ian Michael

(56) References cited:
- JP-A- 5 334 693
- US-A- 5 923 632
- US-A1- 5 066 138
- US-A1- 5 278 401
- US-A1- 5 361 245
- US-B1- 6 314 063
- US-B1- 6 778 473

## Description

The present invention relates to an apparatus and method for detecting a defocus error signal for an optical pickup and an apparatus and method for detecting a seek direction of a recording medium of a land/groove structure adopting the same.

For a recording medium of a next generation DVD family, that is, a recording medium requiring higher density recording than a recording medium of a DVD family, when information is recorded by being defocused, an effect by defocusing is much greater than other existing recording medium using a red laser beam. Thus, a method for compensating therefor is needed.

That is, to cope with the need for high density recording, when a short wavelength light within a blue wavelength range (for example, 420 nm or less) and an objective lens having a numerical aperture (NA) greater than 0.6 are used, the depth of focus of an incident beam is shallow so that a margin for defocus is reduced. Accordingly, a small amount of defocus may be a problem in recording. Here, for a recording medium of the next generation DVD (a so-called HD-DVD) family, the standardization thereof is currently discussed and a light source for emitting light having a wavelength shorter than a red wavelength and an objective lens having NA of 0.6 or more are expected to be used.

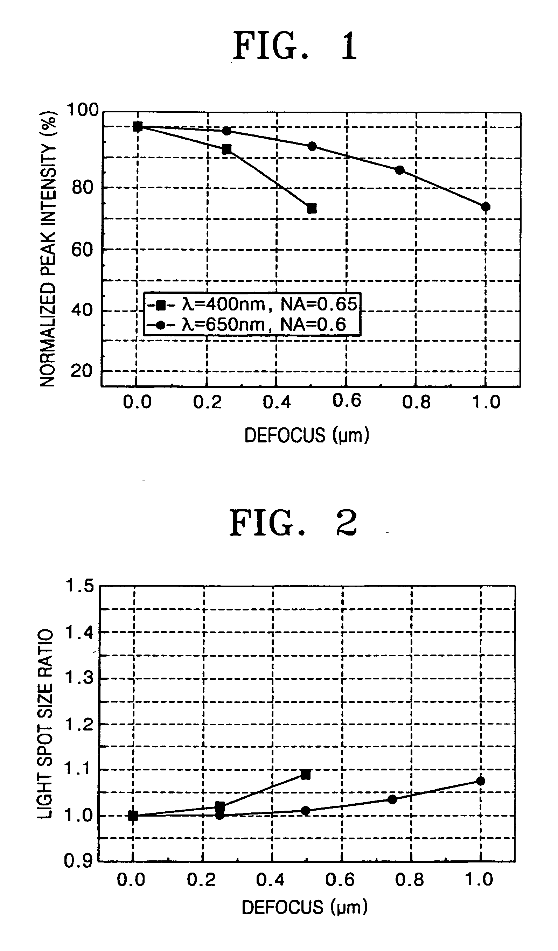

Figure 1 shows a change in intensity of a light spot formed on a recording medium according to defocus. In the graph, the horizontal axis denotes defocus and the vertical axis denotes normalized beam peak intensity. As defocus increases, the intensity of an incident beam having a 400 nm wavelength and an 0.65 NA sharply decreases than an incident beam having a 650 nm wavelength and an 0.60 NA. When recording is performed under these conditions, a mark having desired length and width cannot be recorded. Also, although incident beams have the same wavelength, as NA increases, the intensity of beam is reduced according to defocus.

Figure 2 shows a change in size of a light spot formed on a recording medium according to defocus. In the graph, the horizontal axis denotes defocus and the vertical axis denotes light spot size ratio. It is seen that, as defocus increases, the spot size of a beam having a 400 nm wavelength increases than that of a beam having a 650 nm wavelength. Also, although the light beams have the same wavelength, as NA increases, the spot size increases.

As well known in the field to which the present invention pertains, when a recording medium in a DVD family is subject to recording by using an objective lens having a 0. 6 NA and a light beam having a 650 nm wavelength, control of defocus of about 230 nm is needed. However, for example, when a recording medium of a next generation DVD family is subject to recording by using a blue beam and an objective lens having a 0.85 NA, defocus should be controlled within tens of nanometers.

Thus, in order to finely control defocus within tens of nanometers when recording is performed with respect to the next generation DVD family, a defocus error signal which is not affected by a tilt of a recording medium relative to an objective lens, detrack, and a shift of the objective lens needs to be detected.

JP2000-011422 describes a seek direction detecting apparatus with a photodetector with radially arranged receiving regions (as reflected in the preamble of claim 1), which uses two separate detectors for the detection of the focus error signal and the tracking error signal. The apparatus with radially segmented detectors described in WO00/30083 uses two separate detectors for the detection of the focus error signal.

It is an aim of embodiments of the present invention to provide an apparatus and method for accurately detecting a defocus error signal without being almost affected by a tilt of a recording medium, detrack, and a shift of an objective lens.

Also, it is another aim to provide an apparatus and method having a simple structure for detecting a seek direction of a recording medium of a land/groove structure by using a defocus error signal detected by the defocus error signal detecting apparatus.

According to a first aspect of the invention, there is provided a defocus error signal detecting apparatus comprising a photodetector having first, second and third light receiving regions arranged in a radial direction of a recording medium, each of the light receiving regions independently performing photoelectric conversion with respect to incident light which is reflected/diffracted by the recording medium, and a subtractor for subtracting a sum signal of detection signals from the first and third light receiving regions and a detection signal of the second light receiving region and outputting a defocus error signal, so that defocus and/or a change in thickness of the recording medium can be detected.

Preferably, the photodetector is used for detecting information signals recorded on the recording medium and has an octantal structure divided in each of directions corresponding to a tangential direction and a radial direction of the recording medium from the center thereof.

Preferably, the recording medium is a DVD-RAM disc or a land/groove type next generation DVD-RAM disc.

According to a second aspect of the invention, there is provided a method for detecting defocus error signals comprising the steps of generating first through third detection signals by dividing light reflected/diffracted by a recording medium and passing through an objective lens into first through third light regions in a direction corresponding to a radial direction, and detecting defocus error signals by subtracting a sum signal of the first and third detection signals and the second detection signal, so that defocus and/or a change in thickness of the recording medium can be detected.

The recording medium may be a DVD-RAM disc or a land/groove type next generation DVD-RAM disc.

According to a third aspect of the invention, there is provided a seek direction detecting apparatus comprising a photodetector having first through fourth light receiving regions arranged in a direction corresponding to a radial direction of a recording medium, each of the light receiving regions independently performing photoelectric conversion with respect to incident light reflected/diffracted by the recording medium having a land/groove structure, a signal processor including a first subtractor for subtracting a sum signal of detection signals from the first and fourth light receiving regions and a sum signal of detection signals from the second and third light receiving regions and outputting a defocus error signal, a second subtractor for subtracting a sum signal of detection signals from the first and second light receiving regions and a sum signal of detection signals from the third and fourth light receiving regions and outputting a push-pull tracking error signal, and a comparison-judgement portion for comparing the defocus error signal and the push-pull tracking error signal and outputting a seek direction detection signal.

Preferably, the photodetector is used for detecting information signals recorded on the recording medium and has an octantal structure as each of the light receiving regions is divided into two in a direction corresponding to a radial direction of the recording medium.

The recording medium may be a DVD-RAM disc or a land/groove type next generation DVD-RAM disc.

According to a fourth aspect of the invention, there is provided a method for detecting a seek direction comprising the steps of irradiating light including a predetermined amount of defocus to a recording medium, generating first through fourth detection signals by dividing light reflected/diffracted by the recording medium and passing through an objective lens into first through fourth light regions in a direction corresponding to a radial direction of the recording medium, detecting a defocus error signal by subtracting a sum signal of the first and fourth detection signal and a sum signal of the second and third detection signals, detecting a push-pull tracking error signal by subtracting a sum signal of the first and second detection signal and a sum signal of the third and fourth detection signals, and generating a seek direction detection signal by comparing the defocus error signal and the push-pull tracking error signal.

It is preferred in the present invention that the recording medium is a DVD-RAM disc or a land/groove type next generation DVD-RAM disc.

For a better understanding of the invention, and to show how embodiments of the same may be carried into effect, reference will now be made, by way of example, to the accompanying diagrammatic drawings in which:
Figure 1 is a graph indicating a change in intensity of a light spot formed on a recording medium according to defocus;
Figure 2 is a graph indicating a change in size of a light spot formed on a recording medium according to defocus;
Figure 3 is a view showing distributions of intensity of a light spot according to a change in defocus formed on a land/groove type next generation DVD-RAM disc;
Figure 4 is a view showing an apparatus for detecting a defocus error signal for an optical pickup according to a preferred embodiment of the present invention;
Figures 5A through 5F are graphs indicating defocus error signals (dFE) output from the defocus error signal detecting apparatus of Figure 4 by a light spot formed at a land when a radial tilt, a tangential tilt, defocus, detrack, a shift of an objective lens, and a change in thickness of a recording medium occur, respectively;
Figures 6A through 6F are graphs indicating defocus error signals (dFE) output from the defocus error signal detecting apparatus of Figure 4 by a light spot formed at a groove when a radial tilt, a tangential tilt, defocus, detrack, a shift of an objective lens, and a change in thickness of a recording medium occur, respectively;
Figure 7 is a view showing a seek direction detecting apparatus adopting the defocus error signal detecting apparatus according to an embodiment of the present invention;
Figures 8A and 8B are graphs respectively showing sum signals S1 and S2, a defocus error signal dFE, and a push-pull tracking error signal TEpp detected by the seek direction detecting apparatus of Figure 7 when defocus is not generated at a light spot formed on a recording medium;
Figures 9A and 9B are graphs respectively showing sum signals S1 and S2, a defocus error signal dFE, and a push-pull tracking error signal TEpp detected by the seek direction detecting apparatus of Figure 7 when defocus of -0.5 µm is included in a light spot formed on a recording medium;
Figures 10A and 10B are graphs respectively showing sum signals S1 and S2, a defocus error signal dFE, and a push-pull tracking error signal TEpp detected by the seek direction detecting apparatus of Figure 7 when defocus of +0.5 µm is included in a light spot formed on a recording medium;
Figures 11 and 12 are graphs showing a push-pull tracking error signal TEpp and a defocus error signal dFE detected by the seek direction detecting apparatus of Figure 7 when a light spot defocused by 10 - 15% seeks inwardly and outwardly in a radial direction of a recording medium, respectively; and
Figure 13 is a graph showing a peak-to-peak value of a push-pull tracking error signal TEpp and a defocus error signal dFE detected by the seek direction detecting apparatus of Figure 7 in an off track state.

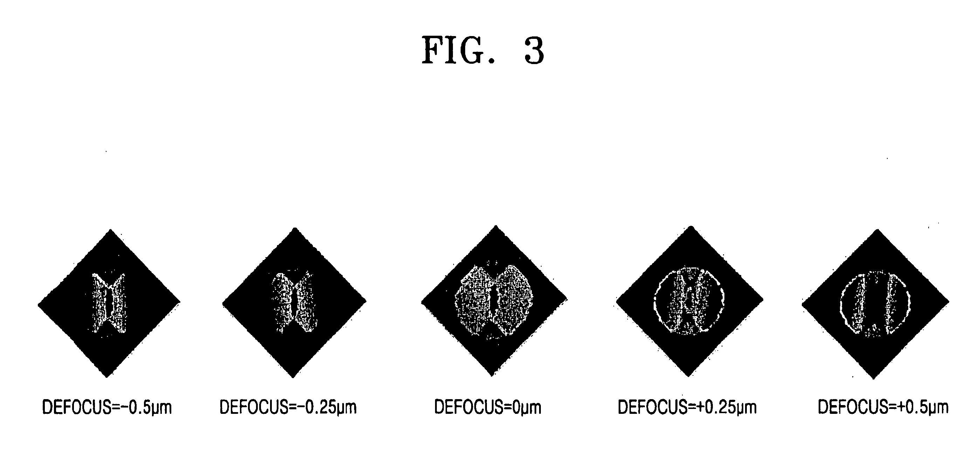

Figure 3 shows distributions of intensity of a spot of light having a 400 nm wavelength (λ) according to a change in defocus formed by using an objective lens having a 0.65 NA on a land/groove type next generation DVD-RAM disc having a track pitch of 0.34 nm and a groove depth of λ/6. In the drawing, the horizontal direction and the vertical direction signify a radial direction and a tangential direction of a recording medium, respective. As can be seen from Figure 3, there is a difference in the variation of the distribution of intensity of a light spot between a the central portion and the peripheral portion of the light spot in a radial direction on a next generation DVD-RAM disc. The variation of the distribution of intensity is approximately opposite with respect to a (+) defocus and a (-) defocus.

It is a characteristic feature of the present invention that a defocus error signal is detected considering the change in distribution of the intensity of a light spot reflected/diffracted by a recording medium according to the direction of defocus as shown in Figure 3, and that a seek direction is detected with respect to from a land/groove type recording medium by using the detected defocus error signal.

That is, in the present invention, the defocus error signal is detected by dividing light reflected/diffracted by the recording medium and passing through an objective lens into first through third light regions in a direction corresponding to the radial direction, and subtracting a sum signal of signals detected from the first and third light regions and a signal detected from the second light region.

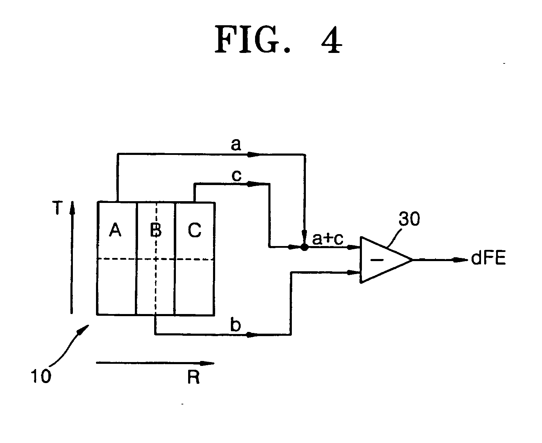

Referring to Figure 4, a defocus error signal detecting apparatus according to a preferred embodiment of the present invention includes a photodetector 10 having first through third light receiving regions **A, B** and **C** separately arranged in a direction **R** corresponding to the radial direction of a recording medium (not shown), and a subtractor 30 for subtracting a sum signal **(a+c)** of signals **a** and **c** detected from the light receiving regions **A** and **C** and a signal **b** detected from the second light receiving region **B** and outputting a defocus error signal **dFE.**

Here, assuming that the direction of an information stream recorded on a recording medium is a tangential direction, a radial direction is perpendicular to the tangential direction.

Each of the first through third light receiving regions **A, B** and **C** of the photodetector 10 is narrow in a direction **R** corresponding to a radial direction and wide in a direction **T** corresponding to a tangential direction. The light reflected/diffracted by the recording medium and incident on the first through third light receiving regions **A, B** and **C** independently undergoes a photoelectric conversion and the first through third detection signals **a, b** and **c** are output.

The photodetector 10 is preferably divided into eight sections in the direction **T** corresponding to the tangential direction of a recording medium and the direction **R** corresponding to the radial direction from the center thereof, as indicated by dotted lines shown in Figure 4, so that it can be used as a photodetector for detecting information signals recorded on the recording medium.

The above-described defocus error signal detecting apparatus according to the present invention has a simple structure for detecting a defocus error signal by using the photodetector 10 for detecting information signals of an optical pickup and a main beam irradiated on the recording medium for recording/reproduction.

The defocus error detecting apparatus having the above structure according to the present invention detects the defocus error signal **dFE** sufficiently considering a change in distribution of intensity according to defocus of a light spot formed on the recording medium. Thus, an accurate defocus detection is possible with no effects by a radial tilt, a tangential tilt, detrack, and a shift of an objective lens.

Further, the defocus error signal **dFE** output from the defocus error signal detecting apparatus according to the present invention indicates a change in thickness of the recording medium when no defocus is generated to the optical pickup adopting the defocus error signal detecting apparatus.

Thus, by using the defocus error signal detecting apparatus of the present invention, not only defocus but also a change in thickness can be detected with respect to a next generation DVD-RAM disc of a land/groove type which requires a fine defocus control. Therefore, when the defocus error signal apparatus of the present invention is adopted, defocus can be finely controlled and an error according to a change in thickness of a recording medium can be corrected.

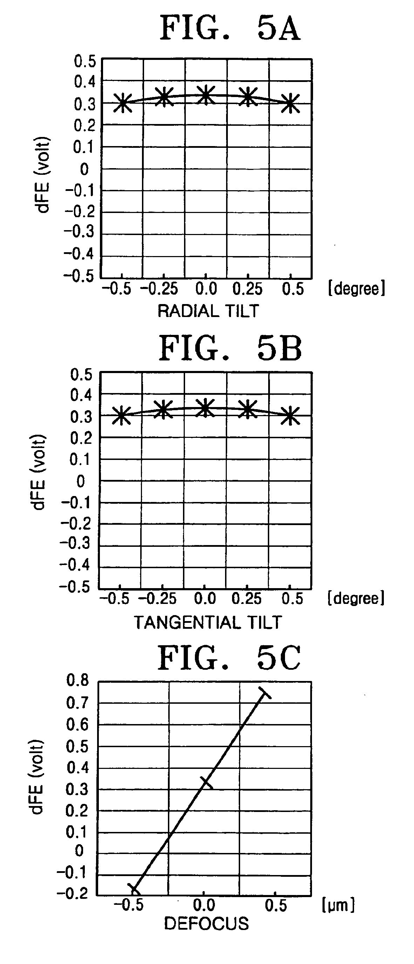

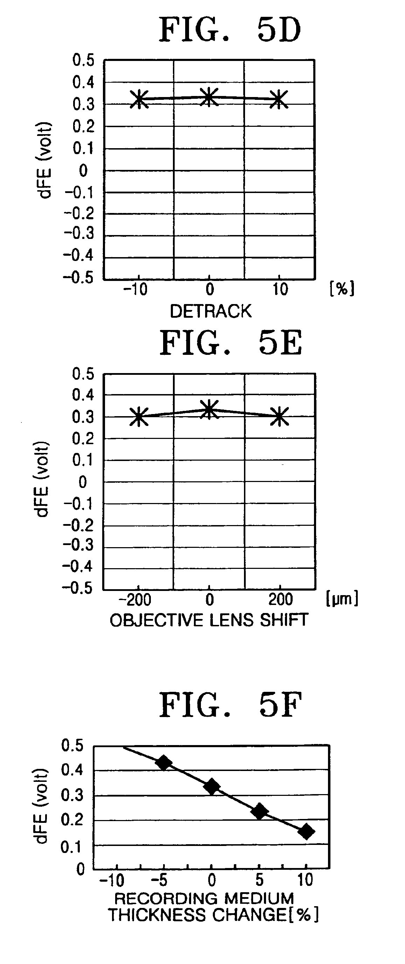

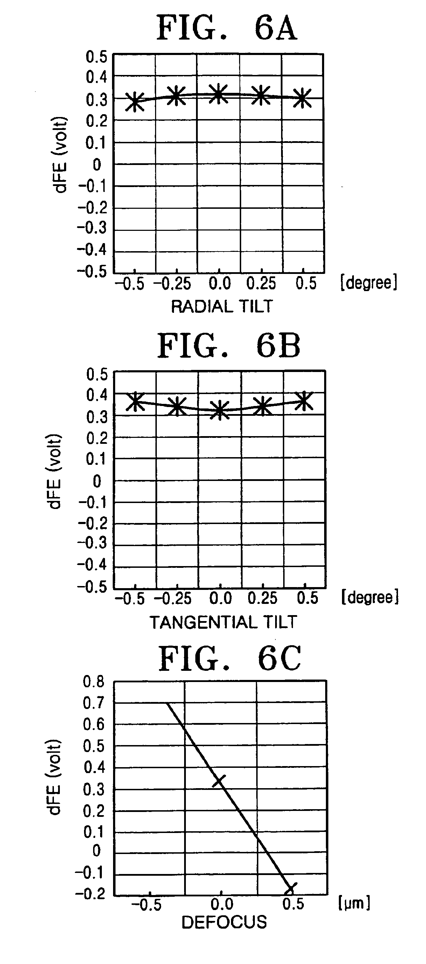

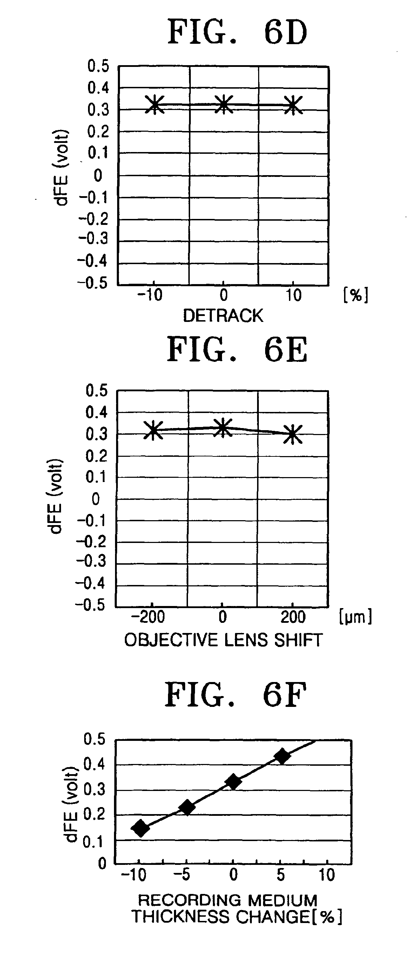

Figures 5A through 5F and Figures 6A through 6F are graphs showing the defocus error signals **dFE** detected by the defocus error signal detecting apparatus according to the present invention when a light spot is formed on a land of a land/groove type recording medium and a groove thereof, respectively. Here, Figure 5A through 6F show examples in the case in which light having a wavelength λ of 400 nm is focused by an objective lens having an NA of 0.65 and forms a light spot on a land/groove type next generation DVD-RAM disc having a track pitch of 0.34 µm and a groove depth of λ/6, and light reflected from the DVD-RAM disc is detected by the defocus error signal detecting apparatus according to the present invention.

Figures 5A through 5E respectively show the defocus error signal **dFE** output from the defocus error signal detecting apparatus of Figure 4 when a radial tilt, a tangential tilt, defocus, detrack and a shift of an objective lens occurs. Likewise, Figures 6A through 6E respectively show the defocus error signal **dFE** output from the defocus error signal detecting apparatus of Figure 4 when a radial tilt, a tangential tilt, defocus, detrack and a shift of an objective lens occurs.

Figures 5F and 6F respectively show a change of the defocus error signal **dFE** output from the defocus error signal detecting apparatus of Figure 4 according to a change in thickness of a recording medium. In Figures 5D and 6D, values of detrack in a horizontal axis are indicated in percentage (%) of a degree of detrack with respect to a track pitch. In Figures 5F and 6F, a change in thickness with respect to a reference thickness (for example, 0.4 mm) of a recording medium is indicated in percentage (%).

The defocus error signal **dFE** detected by the defocus error signal detecting apparatus according to the present invention is opposite to each other in a land and a groove and, as can be seen from Figures 5A through 5F and 6A through 6F, sensitively changes only to generation of defocus and a change in thickness of a recording medium without being affected by a radial tilt, a tangential tilt, detrack and a shift of an objective lens. In Figures 5C, 5F, 6C and 6F, the defocus error signal **dFE** has some offset and the offset can be removed by adjusting a split ratio of the first through third light receiving regions A, B and C.

Thus, by using the defocus error signal detecting apparatus according to the present invention, defocus can be accurately detected so that a fine defocus control is possible when information is recorded or reproduced on or from a recording medium such as a next generation DVD-RAM disc having a land/groove structure.

The detected defocus error signal **dFE** is used to adjust defocus such that the defocus error signal **dFE** equals zero (**dFE**=0) in an on-track state and a peak -to- peak value of the defocus error signal **dFE** becomes minimum in an off-track state. That is, the defocus error signal detecting apparatus according to the present invention is used to detect the amount of defocus existing on a focus loop and adjust an optical system so that defocus can be minimized. Here, in an on-track state, a point where defocus is minimized is a DC level of a peak-to-peak value of the defocus error signal **dFE** detected in an off-track state or a value assigned by the system. In an off-track state, a point where defocus is minimized is a point where a peak-to-peak value of the defocus error signal **dFE** is minimum.

Also, by using the defocus error signal detecting apparatus of the present invention, since a change in thickness of a recording medium can be detected (a change of 5% in thickness can be sufficiently detected as can be seen from Figures 5F and 6F), precisely and accurately an error according to a change in thickness of the recording medium can be finely corrected.

The above-described defocus error signal detecting apparatus according to the present invention shows a structure suitable for a case in which the photodetector 10 is installed at an exit pupil of an objective lens.

When an optical device such as a lens and/or a holographic optical element affecting distribution of intensity of light reflected/diffracted by the recording medium is inserted between the objective lens and the photodetector 10, the defocus error signal detecting apparatus according to the present invention includes the photodetector having a structure modified corresponding to a change in distribution of intensity of light by the above optical device. Accordingly, the defocus error signal detecting apparatus includes a signal processor having a modified structure for detecting a defocus error signal. As above, even when a predetermined optical device affecting the distribution of intensity of light is inserted between the objective lens and the photodetector 10, the structure of a signal processor for detecting a defocus error signal finally becomes one for subtracting a sum signal of the first and second detection signals and a second detection signal from the first through third detection signals detected by dividing light reflected/diffracted by the recording medium and passing through the objective lens into the first through third light regions in a direction **R** corresponding to a radial direction.

Thus, the defocus error signal detecting apparatus according to the present invention may be variously modified according to the structure of an optical system within a scope of a technical concept of the present invention.

According to embodiments of the present invention, a seek direction can be detected by using a detected defocus error signal. That is, light defocused by a predetermined amount by defocusing an objective lens (not shown) of an optical pickup is irradiated on a recording medium having a land/groove structure, for example, a next generation DVD-RAM disc. The light reflected/diffracted by the recording medium and passing through the objective lens is detected by being divided into first through fourth light regions in a direction corresponding to a radial direction. Then, in first through fourth detection signals detected from the first through fourth light regions, a sum signal of the first and fourth detection signals and a sum signal of the second and third signals are subtracted to detect the above-described defocus error signal **dFE.** A push-pull tracking error signal **TEpp** is detected by subtracting a sum signal between the first and second detection signals and a sum signal between the third and fourth signals. Finally, a seek direction is detected by comparing the defocus error signal **dFE** and the push-pull tracking error signal **TEpp.**

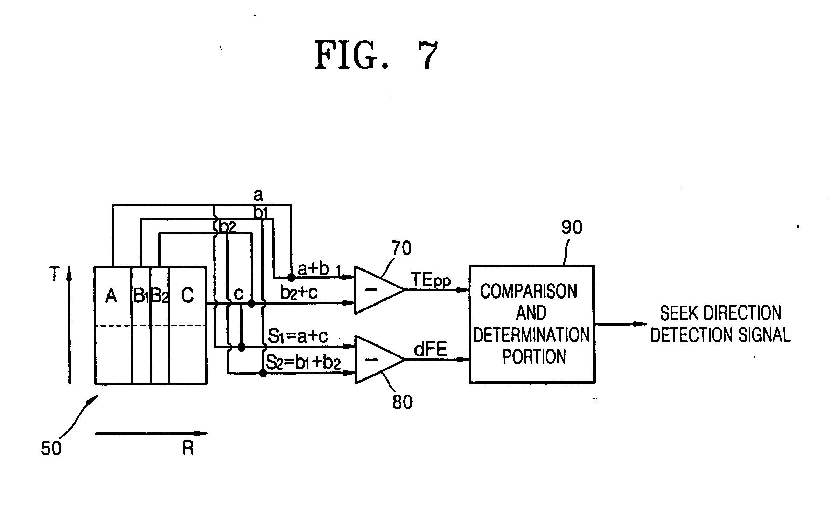

Referring to Figure 7, a seek direction detecting apparatus according to a preferred embodiment of the present invention includes a photodetector 50 having first through fourth light receiving regions **A, B1, B2** and **C** which is arranged in a direction **R** corresponding to a radial direction of a recording medium having a land/groove structure, and a signal processor for detecting a seek direction from detection signals from the first through fourth light receiving regions **A, B1, B2** and **C**. The seek direction detecting apparatus is operated in a state in which a predetermined amount of defocus is generated to a light spot formed on the recording medium.

The first through fourth light receiving regions **A, B1, B2** and **C** of the photodetector 50 each independently perform photoelectric conversion with respect to light incident thereon and output first through fourth detection signals **a, b1, b2** and **c.** The first and fourth light receiving regions **A** and **C** of the photodetector 50 are substantially the same as the first and third light receiving regions **A** and **C** of the photodetector 10 of Figure **4****.** The second and third light receiving regions **B1** and **B2** of the photodetector 50 are substantially the same as the second light receiving regions **B** of the photodetector 10 of Figure 4 which is divided into two sections in the direction **R** corresponding to the radial direction of the recording medium.

Thus, the photodetector 50 is preferably an octantal structure like the photodetector of Figure 4 by dividing the first through fourth light receiving regions **A, B1, B2** and **C** into eight sections by a dotted line in a direction **T** corresponding to a tangential direction of the recording medium, as shown in Figure 7. The seek direction detecting apparatus according to the present invention has a simple structure of using a photodetector for detecting information signals of a optical pickup and a main light irradiated to a recording medium for recording/reproduction.

The signal processor includes a first subtractor 70 for subtracting a sum signal (a+b1) of the first and second detection signals **a** and **b1** and a sum signal (b2+c) of the third and fourth detection signals **b2** and **C** and outputting a push-pull tracking error signal **TEpp,** a second subtractor 80 for subtracting a sum signal (S1=a+c) of the first and fourth detection signals **a** and **c** and a sum signal (S2=b1+b2) of the second and third detection signals b1 and b2 and outputting a defocus error signal **dFE,** and a comparison-judgement portion 90 for comparing the push-pull tracking error signal **TEpp** and the defocus error signal **dFE** and generating a seek direction detection signal.

Here, since the defocus error signal **dFE** includes a DC level (offset), the comparison-judgement portion 90 removes a DC component by AC coupling the defocus error signal **dFE,** binarizes the AC-coupled defocus error signal **dFE** with respect to a central value thereof or a predetermined DC value, and compares the binarized push-pull tracking error signal **TEpp** and the binarized defocus error signal **dFE** to generate a seek direction detection signal.

The seek direction detecting apparatus according to the preferred embodiment of the present invention described with reference to Figure 7, shows a structure suitable for a case in which the photodetector 50 is installed at the exit pupil of an objective lens (not shown), like the above-described defocus error signal detecting apparatus according to the present invention. Accordingly, when an optical device such as a lens and/or a holographic optical element affecting the distribution of intensity of light reflected/diffracted by the recording medium is inserted between the objective lens and the photodetector 50, the seek direction detecting apparatus of the present invention includes the photodetector having a structure modified to correspond to a change in distribution of intensity of light caused by the optical device as above. Also, the seek direction detecting apparatus includes a signal processor having a structure modified accordingly in order to detect a seek direction. As a result, even when an optical device affecting the distribution of intensity of light is inserted between the objective lens and the photodetector 50, the structure of the signal processor for detecting a seek direction is a structure for detecting the defocus error signal **dFE** by subtracting the sum signal of the first and fourth detection signals and the sum signal of the second and third detection signals obtained from the first through fourth detection signals respectively generated from the first through fourth light receiving regions of the photodetector 50 divided in the direction **R** corresponding to a radial direction where a light spot of light reflected/diffracted by a recording medium and passing through the objective lens is formed, and detecting a seek direction by subtracting the detected defocus error signal **dFE** and the push-pull tracking error signal **TEpp.**

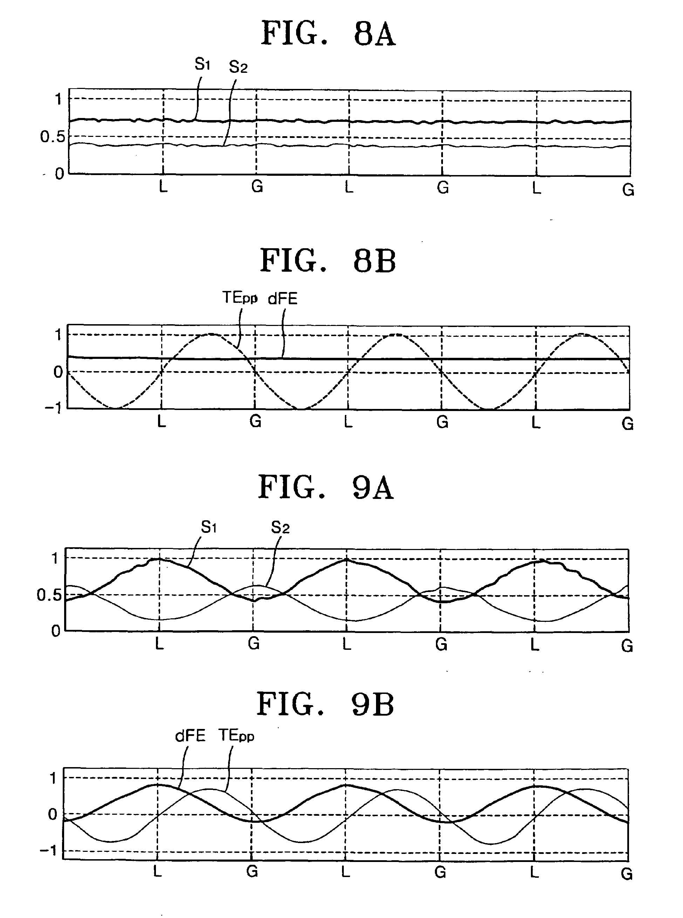

In the seek direction detecting apparatus according to the present invention, the sum signals S1 and S2, the push-pull tracking error signal **TEpp** output from the first and second subtractors 70 and 80, and the defocus error signal **dFE** according to a degree of defocus included in a light spot formed on a recording medium in an off-track state are shown in Figures 8A through 10B.

Referring to Figures 8A and 8B, when defocus is not generated to a light spot formed on a recording medium, the sum signals S1 and S2 and the defocus error signal **dFE** does not vary with respect to a seek (a track seek) in a radial direction of the light spot.

Referring to Figure 9A, when defocus of -0.5 µm is included in a light spot formed on a recording medium, the sum signals S1 and S2 vary as the light spot moves along the radial direction. A difference between the values of the sum signals S1 and S2 becomes greater at a land **L** and relatively small at a groove **G.** The defocus error signal **dFE** obtained by subtracting the sum signals S1 and S2, as shown in Figure 9B, varies as the light spot moves along the radiation direction so that a difference therebetween becomes the maximum at the land **L** and the minimum at the groove **G.** The defocus error signal **dFE** maintains a phase difference of about +90° or -90° with respect to the push-pull tracking error signal **TEpp.**

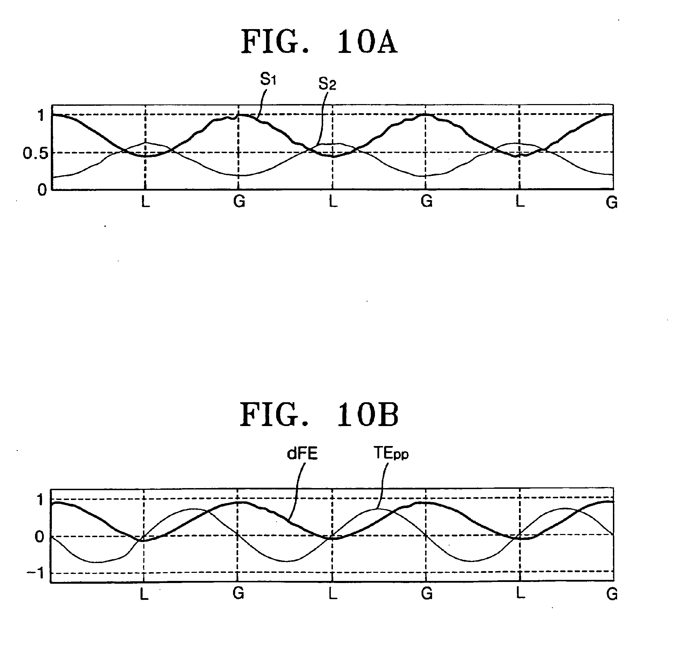

Referring to Figure 10A, when defocus of +0.5 µm is included in a light spot formed on a recording medium, the sum signals S1 and S2 vary as the light spot moves along the radial direction. The difference between the sum signals S1 and S2 becomes great at the groove G and small at the land **L** in contrast with Figure 9A. As shown in Figure 10B, the defocus error signal **dFE** obtained by subtracting the sum signals S1 and S2 becomes the minimum at the land **L** and the maximum at the groove **G**, as the light spot moves along the radial direction, in contrast with Figure 9B. Also, the defocus error signal **dFE** maintains a phase difference of about +90° or -90° with respect to the push-pull tracking error signal **TEpp.**

As can be seen from Figures 8A through 10B, the defocus error signal **dFE** indicating the maximum or minimum values at the land **L** and the groove **G** according to the amount and direction of defocus included in a light spot is detected. Also, a phase difference of about +90° or-90° exist between the defocus error signal **dFE** and the push-pull tracking error signal **TEpp.** Thus, a comparison between the defocus error signal **dFE** and the push-pull tracking error signal **TEpp** is possible.

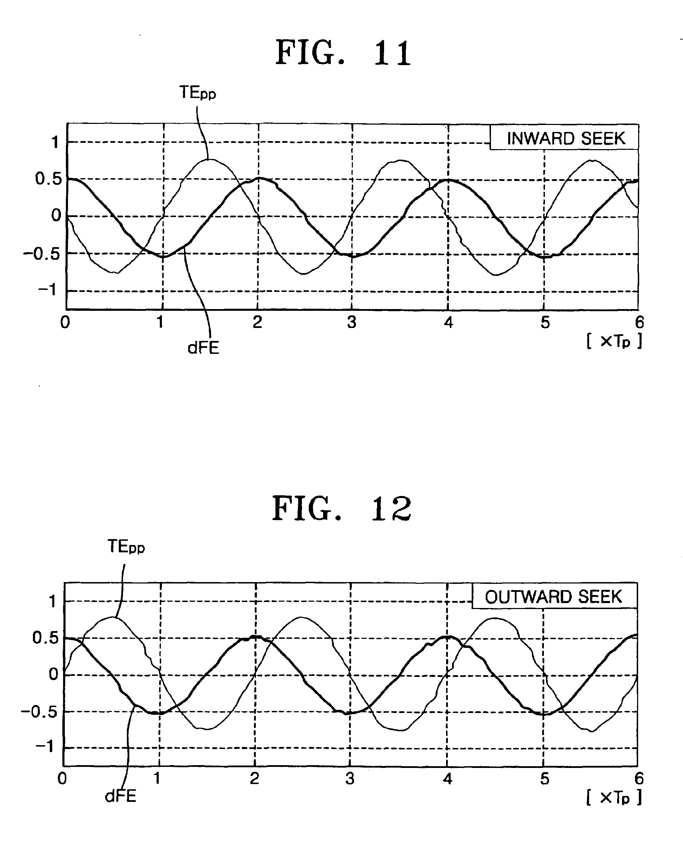

Figures 11 and 12 is graphs showing the push-pull tracking error signal **TEpp** and the defocus error signal **dFE** output from the first and second subtractors 70 and 80 when a light spot including a 10 - 15% defocus seeks inward and outward along the radial direction of a recording medium, respectively. The interval of a horizontal axis is obtained by normalizing a track pitch **Tp** which is a distance between the center of a land and the center of a groove. In the graphs, the values, 1, 2, 3, ..., indicated along the horizontal direction signify distances corresponding to one time, two times, three times, ... of the track pitch **Tp**. For example, when a point "0" in the horizontal axis indicates the center of a groove, a point "1" indicates the center of a land which is the next track.

As can be seen from Figures 11 and 12, the push-pull tracking error signal **TEpp** and the defocus error signal **dFE** maintain a phase difference of +90° or -90° according to the direction of seek. In Figures 11 and 12 showing the push-pull tracking error signal **TEpp** and the defocus error signal **dFE** when defocus of about 15% is applied to a light spot, a value of the defocus error signal **dFE** becomes about 50% of a tracking error signal **TEpp0** in a normal state where there is no defocus while the push-pull tracking error signal **TEpp** becomes about 74% of the tracking error signal **TEpp0** in the normal state.

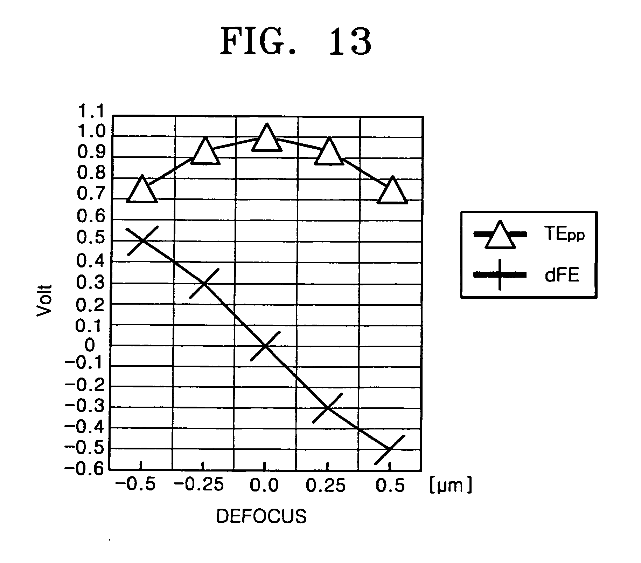

Figure 13 shows the push-pull tracking error signal **TEpp** and the defocus error signal **dFE** according to defocus. As can be seen from Figure 13, the push-pull tracking error signal **TEpp** is hardly affected by defocus. In Figure 13, **TEpp** is a peak-to-peak value of a tracking error signal detected in an off-track state and **dFE** is a peak-to-peak value of a defocus error signal according to defocus in an off-track state.

In the seek direction detecting apparatus according to the present invention, a predetermined amount of defocus is generated to a light spot formed on a recording medium. Then, the defocus error signal **dFE** and the push-pull tracking error signal **TEpp** are detected and compared with each other so that a precise and accurate seek direction can be detected.

Also, for example, when a seek is performed in a state in which +0.5 µm defocus is applied as shown in Figure 10B, the value of the defocus error signal **dFE** at a land position is detected to be less than in a case in which defocus is not applied (Figure 8B) while the value of the defocus error signal **dFE** at a groove position is detected to be greater than in a case in which defocus is not applied. When a seek is performed in a state in which defocus is applied in the opposite direction (Figure 9A), the results opposite to the above are obtained. Thus, land/groove can be determined by using the defocus error signal **dFE** detected when a seek is performed in a state in which a predetermined amount of defocus is applied.

As described in the above, the present invention can be applied to a recording medium having a land/groove structure regardless of its specifications. For example, according to the present invention, the defocus error signal **dFE** and/or seek direction can be detected with respect to a DVD-RAM disc having a track pitch of 0.615 µm, for example, by using an objective lens having a 0.6 NA. Also, as shown in the above-described graphs, the present invention may be applied to not only a recording medium having a track pitch of 0.34 µm using an objective lens having a 0.65 NA, but also a recording medium having a land/groove structure having a track pitch of 0.3 µm or less using an objective lens having a 0.8 or more NA. That is, by using the present invention, the defocus error signal **dFE** and/or seek direction can be detected with respect to a next generation DVD-RAM disc of which standardization will be established in the future. Further, by using the present invention, a land/groove of a recording medium having a land/groove structure can be determined.

According to the present invention described above, a defocus error signal which sensitively changes with respect to a change in defocus and/or thickness of a recording medium can be detected without being affected by a relative tilt of the recording medium with respect to an objective lens, detrack and a shift of the objective lens. Thus, by using the defocus error signal, defocus can be precisely controlled and a change in thickness of the recording medium can be detected.

Furthermore, when the defocus error signal and the push-pull tracking error signal according to the present invention are briefly compared in a state in which a predetermined amount of defocus is applied to a light spot, a seek direction of the recording medium having a land/groove structure can be detected. Also, a land/groove can be determined by using the defocus error signal detected in a state in which a predetermined amount of defocus is applied to a light spot.

The invention is not restricted to the details of the foregoing embodiment(s).

## Claims

1. A seek direction detecting apparatus, comprising:
a photodetector having first through fourth light receiving regions (A, B1, B2, C) arranged in a direction corresponding to a radial direction of a recording medium, each of the light receiving regions independently performing photoelectric conversion with respect to incident light reflected/diffracted by the recording medium having a land/groove structure; the apparatus being **characterized by** further comprising
a signal processor including a first subtractor (70) for subtracting a sum signal of detection signals from the first and fourth light receiving regions (A, C) and a sum signal of detection signals from the second and third light receiving regions (B1, B2) and outputting a corresponding defocus error signal;
a second subtractor (80) for subtracting a sum signal of detection signals from the first and second light receiving regions (A1, B1) and a sum signal of detection signals from the third and fourth light receiving regions (B2, C) and outputting a corresponding push-pull tracking error signal; and
a comparison-judgement portion for comparing the defocus error signal and the push-pull tracking error signal and outputting a seek direction detection signal.

2. The apparatus as claimed in claim 1, wherein the photodetector (50) is used for detecting information signals recorded on the recording medium and is divided in a tangential direction and a radial direction with respect to the recording medium to form eight light receiving sections.

3. The apparatus as claimed in claim 1 or 2, wherein the recording medium is a DVD-RAM disc.

4. The apparatus as claimed in claim 1 or 2, wherein the apparatus further comprises a light source for emitting light having a wavelength shorter than 420 nm and an objective lens having a numerical aperture greater than 0.6.

5. A method for detecting a seek direction, comprising by the steps of:
irradiating light including a predetermined amount of defocus to a recording medium;
generating first through fourth detection signals by dividing light reflected/diffracted by the recording medium and passing through an objective lens into first through fourth light regions in a direction corresponding to a radial direction of the recording medium;
detecting a defocus error signal by subtracting a sum signal of the first and fourth detection signal and a sum signal of the second and third detection signals; the method being further **characterized by** comprising the steps of:
detecting a push-pull tracking error signal by subtracting a sum signal of the first and second detection signal and a sum signal of the third and fourth detection signals; and
generating a seek direction detection signal by comparing the defocus error signal and the push-pull tracking error signal.

6. The method as claimed in claim 5, wherein the recording medium is a DVD-RAM disc.

7. The method of claim 5, wherein the irradiating step comprises irradiating light having a wavelength shorter than 420 nm through an objective lens having a numerical aperture greater than 0.6 to a recording medium.

## Patentansprüche

1. Vorrichtung zur Detektion einer Suchrichtung, umfassend:
einen Photodetektor mit ersten bis vierten Lichtempfangsbereichen (A, B1, B2, C), die in einer einer Radialrichtung eines Aufnahmeträgers entsprechenden Richtung angeordnet sind, wobei jeder der Lichtempfangsbereiche unabhängig photoelektrische Umwandlung hinsichtlich von dem Aufnahmeträger mit einer Land-Groove-Struktur reflektierten/gebeugten einfallenden Lichts durchführt; wobei die Vorrichtung **dadurch gekennzeichnet ist, dass** sie ferner Folgendes umfasst:
einen Signalprozessor mit einem ersten Subtrahierer (70) zum Subtrahieren eines Summensignals an Detektionssignalen von dem ersten und vierten Lichtempfangsbereich (A, C) und eines Summensignals an Detektionssignalen von dem zweiten und dritten Lichtempfangsbereich (B1, B2) und zum Ausgeben eines entsprechenden Defokussierungsfehlersignals;
einen zweiten Subtrahierer (80) zum Subtrahieren eines Summensignals an Detektionssignalen von dem ersten und zweiten Lichtempfangsbereich (A, B1) und eines Summensignals an Detektionssignalen von dem dritten und vierten Lichtempfangsbereich (B2, C) und zum Ausgeben eines entsprechenden Push-Pull-Spurführungsfehlersignals; und
einen Vergleichs-Beurteilungs-Abschnitt zum Vergleichen des Defokussierungsfehlersignals und des Push-Pull-Spurführungsfehlersignals und Ausgeben eines Suchrichtungsdetektionssignals.

2. Vorrichtung nach Anspruch 1, wobei der Photodetektor (50) zum Detektieren von auf dem Aufnahmeträger aufgenommenen Informationssignalen verwendet wird und in einer tangentialen Richtung und einer radialen Richtung mit Bezug auf den Aufnahmeträger zu acht Lichtempfangsteilbereichen unterteilt wird.

3. Vorrichtung nach Anspruch 1 oder 2, wobei der Aufnahmeträger eine DVD-RAM-Platte ist.

4. Vorrichtung nach Anspruch 1 oder 2, wobei die Vorrichtung weiter eine Lichtquelle zur Abgabe von Licht mit einer Wellenlänge von kürzer als 420 nm und eine Objektivlinse mit einer numerischen Apertur von größer als 0,6 umfasst.

5. Verfahren zur Detektion einer Suchrichtung, die folgenden Schritte umfassend:
Bestrahlung von Licht einschließlich einer vorbestimmten Menge von Defokussierung auf einen Aufnahmeträger;
Erzeugen eines ersten bis vierten Detektionssignals durch Aufteilen von von dem Aufnahmeträger reflektiertem/gebeugtem Licht und Weitergeben durch eine Objektivlinse in den ersten bis vierten Lichtbereich in einer einer radialen Richtung des Aufnahmeträgers entsprechenden Richtung;
Detektieren eines Defokussierungsfehlersignals durch Subtrahieren eines Summensignals des ersten und vierten Detektionssignals und eines Summensignals des zweiten und dritten Detektionssignals;
wobei das Verfahren ferner **dadurch gekennzeichnet ist, dass** es die folgenden Schritte umfasst:
Detektieren eines Push-Pull-Spurführungsfehlersignals durch Subtrahieren eines Summensignals des ersten und zweiten Detektionssignals und eines Summensignals des dritten und vierten Detektionssignals; und
Erzeugen eines Suchrichtungsdetektionssignals durch Vergleichen des Defokussierungsfehlersignals und des Push-Pull-Spurführungsfehlersignals.

6. Verfahren nach Anspruch 5, wobei der Aufnahmeträger eine DVD-RAM-Platte ist.

7. Verfahren nach Anspruch 5, wobei der Bestrahlungsschritt das Bestrahlen von Licht mit einer Wellenlänge von kürzer als 420 nm durch eine Objektivlinse mit einer numerischen Apertur von größer als 0,6 auf einen Aufnahmeträger umfasst.

## Revendications

1. Dispositif de détection d'une direction de recherche, comprenant :
un photodétecteur comportant des première à quatrième régions (A, B1, B2, C) réceptrices de lumière agencées suivant une direction correspondant à une direction radiale d'un support d'enregistrement, chacune des régions réceptrices de lumière réalisant indépendamment une conversion photoélectrique de la lumière incidente réfléchie/diffractée par le support d'enregistrement possédant une structure à aplats/sillons ;
le dispositif étant **caractérisé en ce qu'**il comprend en outre :
un processeur de signaux comportant un premier soustracteur (70) conçu pour soustraire un signal somme de signaux de détection provenant des première et quatrième régions (A, C) réceptrices de lumière et un signal somme de signaux de détection provenant des deuxième et troisième régions (B1, B2) réceptrices de lumière et pour produire un signal d'erreur de défocalisation correspondant ;
un deuxième soustracteur (80) conçu pour soustraire un signal somme de signaux de détection provenant des première et deuxième régions (A, B1) réceptrices de lumière et un signal somme de signaux de détection provenant des troisième et quatrième régions (B2, C) réceptrices de lumière et pour produire un signal d'erreur de suivi de piste push-pull correspondant ; et
une partie de comparaison-évaluation conçue pour comparer le signal d'erreur de défocalisation et le signal d'erreur de suivi de piste push-pull et pour produire un signal de détection d'une direction de recherche.

2. Dispositif selon la revendication 1, le photodétecteur (50) étant utilisé pour détecter des signaux d'information enregistrés sur le support d'enregistrement et étant divisé suivant une direction tangentielle et une direction radiale du support d'enregistrement pour former huit secteurs récepteurs de lumière.

3. Dispositif selon la revendication 1 ou 2, le support d'enregistrement étant un disque DVD-RAM.

4. Dispositif selon la revendication 1 ou 2, comprenant en outre une source de lumière conçue pour émettre de la lumière possédant une longueur d'onde inférieure à 420 nm, et une lentille objective possédant une ouverture numérique supérieure à 0,6.

5. Procédé de détection d'une direction de recherche, comprenant les étapes consistant à :
projeter de la lumière incorporant une quantité prédéterminée de défocalisation sur un support d'enregistrement ;
générer des premier à quatrième signaux de détection en divisant la lumière réfléchie/diffractée par le support d'enregistrement et traversant une lentille objective en des première à quatrième régions de lumière suivant une direction correspondant à une direction radiale du support d'enregistrement ;
détecter un signal d'erreur de défocalisation en soustrayant un signal somme des premier et quatrième signaux de détection et un signal somme des deuxième et troisième signaux de détection ;
le procédé étant **caractérisé en ce qu'**il comprend en outre les étapes consistant à :
détecter un signal d'erreur de suivi de piste push-pull en soustrayant un signal somme des premier et deuxième signaux de détection et un signal somme des troisième et quatrième signaux de détection ; et
générer un signal de détection d'une direction de recherche en comparant le signal d'erreur de défocalisation et le signal d'erreur de suivi de piste push-pull.

6. Procédé selon la revendication 5, le support d'enregistrement étant un disque DVD-RAM.

7. Procédé selon la revendication 5, l'étape consistant à projeter de la lumière comprenant la projection sur un support d'enregistrement d'une lumière possédant une longueur d'onde inférieure à 420 nm à travers une lentille objective possédant une ouverture numérique supérieure à 0,6.
